# EUROPEAN PATENT APPLICATION

(11) **EP 1 995 052 A1**
(43) Date of publication of application: **26.11.2008**
(21) Application number: 07075397.5
(22) Date of filing: 22.05.2007
(51) Int. Cl.: B31D 3/02, B32B 3/12

(54) **Elastic honeycomb sheet, its production process and equipment to produce**

(71) Applicant: EconCore N.V., 3001 Leuven (BE)
(72) Inventor: Pflug, Jochen, 65207 Wiesbaden (DE); Neirinck, Wouter, 3010 Leuven (BE)
(74) Representative: Bird, William Edward

(57) **Abstract**

An elastic folded honeycomb structure is described which is produced from a continuous web (10) of material by plastic deformation perpendicular to the plane of the material to thereby form half-hexagonal cell walls (5,7,15) which are essentially not flat and connecting areas (17,18). By folding in the direction of conveyance the cell walls meet to thereby form the honeycomb structure. The cell walls are formed from the 3D-structures such that the cells walls have convex and/or concave portions and exhibit an elastic behavior under flatwise compression.

## Description

The present invention relates to cellular structures such as folded honeycomb structures, methods of manufacturing the same and equipment for manufacturing the same. In particular, the present invention concerns a folded honeycomb material, a process and equipment to produce the same.

### Technical Background

There are many applications for resilient materials. Often rubber materials such as foamed rubber materials are used and due to mixtures of incompatible materials the final composite may be difficult to recycle and hence end up as waste products. An example of the use of different materials is the manufacture of carpets. In the manufacture of tufted carpet a pile layer is attached, usually by insertion of yarn loops, to a carrier material, for example, spunbonded or woven fabric as a primary backing. The surface may consist of velours or loops. The tufted carpet is prepared by stitching the primary backing material with yarn in such a manner so as to form on the top surface of the backing material a pile comprising numerous closely spaced erect loops of yarn. Typically, the bottom surface of the primary backing material is thereafter coated with a polymeric adhesive and a secondary backing material is adhered thereto. Finally, the assembled structure is passed through an oven and a compression zone to cure the polymeric adhesive and laminate the assemblage into a monolithic tufted carpet structure. By this process, the yarn tufts are bonded to the primary backing material, and the secondary backing material is simultaneously bonded to the tufted carpet structure. The adhesive is typically a latex adhesive. The secondary backing may be a textile backing (web or fabric) or a foamed latex backing.

The use of a latex precoat has disadvantages both during production and when recycling tufted carpets. Processing results in excessive waste water and unpleasant odors. Because laminating of secondary backings to tufted carpets still requires increased latex precoating, the cost for producing such carpets is correspondingly high. In some cases, the latex binder is diluted with calcium carbonate to reduce cost, which causes problems during waste disposal by incineration because of noncombustible filling material.

It would be advantageous to have an elastic sheet material with controllable and settable elastic properties that is easier to recycle.

Folded honeycombs known from WO 97/03816 are produced continuously from a single layer, e.g. a flat body. Hexagonal cells are constructed by folding after the introduction of cuts. The cells are bridged by covering-layer connecting surfaces. Folded honeycombs without cuts can be produced economically from one continuous layer of thermoplastic film by rotational vacuum thermoforming. Such folded honeycombs are described in WO 00/32382 and have connecting surfaces covering every hexagonal cell on both sides. These honeycombs are used as a core material in sandwich constructions and are therefore designed to have a high compression stiffness.

Furthermore, resilient thermoplastic honeycombs are known (used for sports pads US 5840397 or in the sole of shoes US 4485568) which are made from elastic material like e.g. thermoplastic elastomer material as described in US5039567. These resilient honeycomb cores are nowadays produced by an expansion process (e.g. with equipment described in US 5375305).

Also structures which provide a larger degree of elasticity due to their geometry are known. Such geometries can have a very elastic behavior and have been described for use as elastic elements as a plurality of bellows in a square, see US 5640731, and in a honeycomb arrangement, see US 4213202.

### Summary of the Invention

An object of the invention is to be able to provide good methods and apparatus to produce folded honeycombs with cell walls with an elastic behavior under flatwise compression. An advantage of the present invention is that it provides methods and apparatus to produce folded honeycombs without using cuts. A further advantage can be that the present invention allows minimal material usage in the construction of the folded honeycombs.

Another advantage of the present invention is that it allows vacuum forming and a good attachment to covering layers of the flat folded honeycomb.

The object is achieved in accordance with the subject matter of the attached claims and further developed by further features of the subclaims.

The present invention provides a folded honeycomb structure, formed from a plurality of cells arranged in rows, comprising: cells have lateral cell walls which adjoin one another in the form of a ring and are bounded toward two opening sides of each cell by covering-layer planes whereby the cells are each bridged completely in one or other of the covering-layer planes; the folded honeycomb being formed from a substantially uncut flat body; the folded honeycomb having a plurality of 3D-structures formed by plastic deformation and connecting areas produced by the plastic deformation, the connecting areas being located in one or other of the covering-layer planes in the folded honeycomb.

In a further aspect of the present invention, a flat body, e.g. a web of material, is plastically deformed mainly perpendicularly to the material plane and narrowed, e.g. folded, in the conveying direction, until the cell walls meet and can be connected. Connection areas having a u- or v-shape are formed between the half-hexagonal cell walls to enable a good attachment of the honeycomb cell walls to both covering layers with a minimal amount of additional material.

In the present invention the material structure with cell walls formed in a 3D shape such as a bowed, curved or undulating shape enables to form a single material web into a thick elastic honeycomb sheet with low weight and low material cost. The elastic properties of the honeycomb sheet can be controlled with geometrical parameters, like cell wall thickness or amplitude and wavelength of the undulating shape of the cell walls.

The present invention also provides a process for producing a folded honeycomb from a flat body composed of a plastically deformable material, comprising:
a) plastically deforming the flat body to form first 3D-structures and second connection areas therein, the second connection areas being formed between first 3D-structures; and
b) folding the 3D-structures towards each other to form cells having cell walls which adjoin one another in the form of a ring so that a cell wall of one cell adjoins the cell wall of another cell in a honeycomb structure.

Further the present invention provides an equipment for producing a folded honeycomb from a flat body composed of a plastically deformable material, comprising:
a) means for plastically deforming the flat body to form first 3D-structures and second connection areas therein, the second connection areas being formed between first 3D-structures; and
b) means for folding the 3D-structures towards each other to form cells having cell walls which adjoin one another in the form of a ring so that a cell wall of one cell adjoins the cell wall of another cell in a honeycomb structure.

### Brief Description of the Drawings

The present invention and its exemplary embodiments will be described with reference to the following schematic drawings:
FIGs. 1a to c show a section of the plastically deformed material web in accordance with an embodiment of the present invention. FIGs. 1a and b show stages I, I I, I in the production process. FIG. 1c shows the same process in a side view.
FIG. 2 shows the section of the plastically deformed material web in a detailed view.
FIGs. 3a to d shows various designs in accordance with embodiments of the present invention,
FIG. 4 shows a section of the plastically deformed web material in accordance with a further embodiment of the present invention and stages I, II, III in the production process.
FIG. 5 shows schematically a side view of a further folded honeycomb in accordance with an embodiment of the present invention.
FIG. 6 shows a side view of a further folded honeycomb in accordance with the present invention.

### Description of the Illustrative Embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

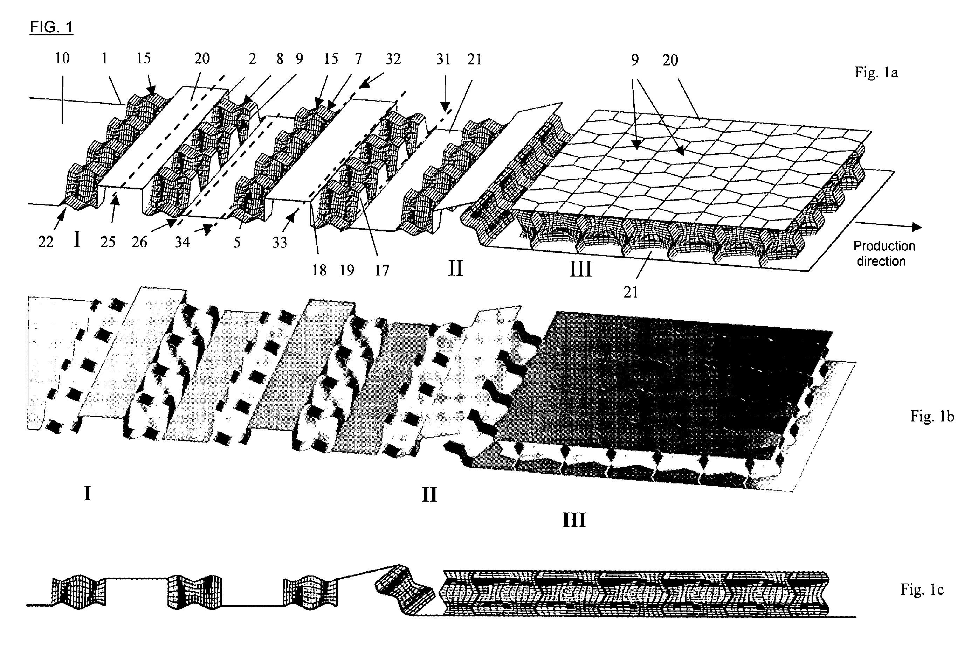

FIGs. 1 a and b show a section of a flat web 10 of thin, plastically deformable material such as a thermoplastic polymer, fiber composite material, plastically deformable paper or metal sheet, which has plastic deformations 1, 2 perpendicular to the material web. FIG. 1c shows a side view of the processed web material shown in FIGs. 1a and b. In Figs. 1a, b, c intermediate states I and II and final state III are shown in the production of the folded honeycomb, with deformed regions 8 formed upwardly. In the regions 20, the material is formed complete, i.e. rectangularly, and in the regions 22 with a 3D shape, e.g. polygonally, for example trapezoidally, sinusoidally, arcuately or the like, from the plane of the web 10. In the regions 21, the web material is not deformed. The deformations of the web material form ridges 8 and valleys 9 whereby each of these is not necessarily continuous. For example, the ridges 8 can be composed of a linear series of deformed sections 1, 2 e.g. polygonal, for example trapezoidal, or sinusoidal, or arcuate sections or the like. Preferably, the ridges 8 have a top surface 15 that, although generally parallel to the plane of the web of material, has a 3D shape such as a bowed, curved or undulating shape which will generate side walls to honeycomb cells that have a specific elasticity as explained below. The production direction is preferably as shown in Fig. 1 however a direction perpendicular thereto (parallel to the axes 25 and 26) could be used as well. Additionally, the material on the side surface regions 5 and 7 of the ridges 8 can be plastically deformed, e.g. in a 3D shape such as a bowed, curved or undulating shape which will generate cell walls to honeycomb cells that have a specific elasticity as explained below. The side walls are joined together into a ring to form the cells during a folding operation. The deformations introduced in the side surface regions 5, 7 can be the same as in the regions 15 or can be different. The way that the 3D shapes are formed in the regions 15, 5, 7 determines the elastic properties of the honeycomb cells.

The web material 10 is stretched at the transitions to the regions 20 and 21 and forms the areas 17 and 18, which are substantially perpendicular to the material web. The deformation of the web material in the regions 22 serves the formation of three-dimensional shapes, which form the walls of cell halves in the folded end product. The cells form elements of the folded end product, the walls of which extend transversely to the longitudinal direction of the folded end product. In the folded end product, the cells formed by folding are preferably generally of a cylindrical in cross section, the axis of the cylinder extending transversely with respect to the longitudinal direction of the folded end product. However, the cells have side walls that generate balloon-like or bellows-like shapes that have a controlled elasticity when compressed along the axis of the cells. The general cross-sectional shape of a cell can be selected as desired, for example circular or polygonal, in particular even-numbered polygonal, for example hexagonal. The present invention includes a mixture of cells with different cross-sectional shapes.

FIG.s 1a, 1b and 1c also show a further intermediate state II in the production of the folded honeycomb. The deformed material web is folded about the folding lines 31, 32, 33 and 34 by means of a folding operation, the surface areas 18 are folded onto the surface areas of the region 20, and the surface areas 15 come to lie flat on the surface areas of the regions 21. This folding operation could be carried out, for example, by means of a flat hot tool which can also preheat the cell walls which meet each other for welding.

FIGs. 1 a and 1 b also show (at III) hexagonal honeycomb cells after the abutment of the cell walls. As a result of being folded together, the adjacent regions 20 (respectively 21) butt against one another and can be connected to one another to form covering layers. Under certain circumstances, it is then possible to dispense with a complete surface area connection of the cell walls. The cells can be made non-airtight in which case the elasticity is mainly provided by the shape, thickness and material selection for the regions 5, 7, 15. Preferably the material is during flatwise compression in mainly elastic deformation state, so that an almost full recovery to the initial thickness is possible, after full compaction. Alternatively, a connection of the cell walls and the adjacent regions 20 (respectively 21), the result is preferably air-tight, closed hexagonal spaces. If the cells are airtight, then the elasticity of the bellows-like shape caused by the shape of the regions 15, 5, 7 is increased due to the trapped air forming a cushion.

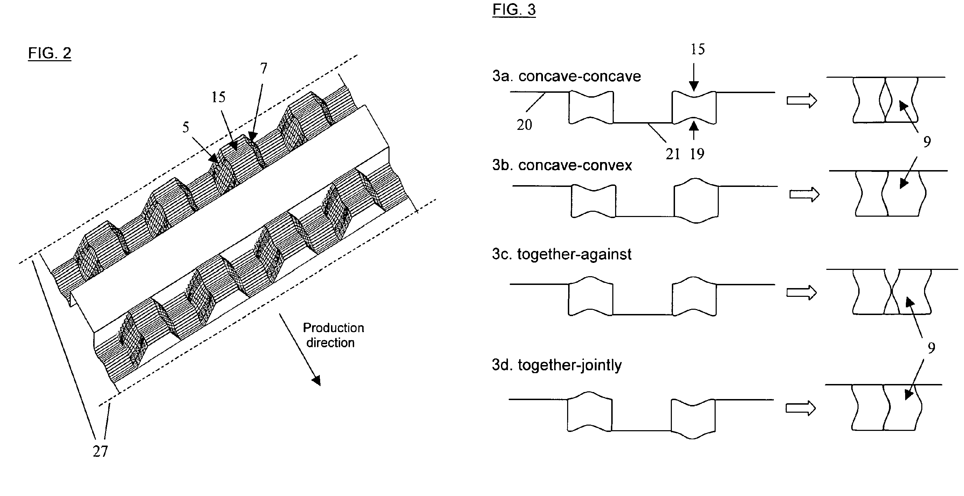

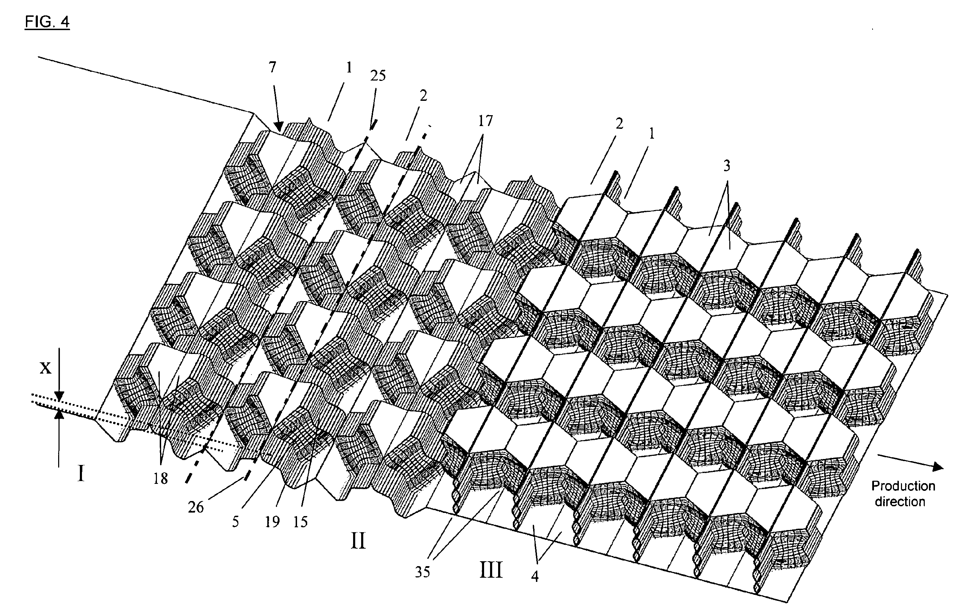

As shown in Fig. 1 a and b and best seen in side view in FIG. 1c, state III, the hexagonal cells 9 extend in a direction perpendicular to the original plane of the web material 10. They have flat top and bottom surfaces that have been formed from regions 20, 21. These regions may be covered by further layers of material to provide more reinforcing. The side walls of the cells are formed into a ring. The side walls of the cells have a 3D shape, e.g. in the form of bellows-like elements. These are formed by the shape of the regions 5, 7, 15 or deformations 1, 2 in the folding operation. As shown in FIG. 1c, these bellows-like shaped side walls touch the bellows-like shaped side walls of an adjacent cell at their extreme, convex surfaces. Between the touching zones, the side walls from adjacent cells can be separated from each other as shown in Fig. 3a and Fig. 4. The undulating, bowed or curved shape of the side walls of the cells 9 provides for a degree of flexibility when compressed perpendicular to the plane of the original web. In this respect the side walls are non-straight in the direction perpendicular to the original plane of the web material 10. The non-straightness provides for a controlled collapse of the cells without a catastrophic buckling as could occur with straight sided cells. The effect of the touching of the bellows-like elements in adjacent cells is to increase the stiffness and to thereby control the elasticity of the cells.

The production can be automated and run continuously. A suitable procedure is to use rotating tools. Accordingly, a substantial aspect of the present invention is to form a folded honeycomb by means of non-cutting, continuous, plastic rotation forming of a material web. The plastic deformation can be carried out, for example, by means of a "rotation thermoforming" process, such as is common in the production of air-bubble film. There, the material is drawn by a profiled roll with the aid of vacuum. Interengaging profiles running against each other can also be used.

FIG. 2 shows a detailed view of the material web in state I in the production. In any of the embodiments of the present invention, additional covering layers to accommodate higher tensile and compressive loads can be fixed or adhesively bonded onto the honeycomb, either directly or subsequently. Depending on the starting material, the folded honeycomb can already form a rigid, lightweight, elastic, sandwich board, even without covering layers.

The present invention does not rule out the possibility that, following the formation of the trapezoidal, sinusoidal or circular structures in the material web, and in particular after the folding of the deformed material web, cracks' arise. This can lead to the extent at which the sub-areas (17 respectively 18) wholly or partly disappear.

FIG. 3 shows schematically various designs, each of which is an embodiment of the present invention. In these designs the regions 5, 7, 15 are shaped by plastic deformation of the web material 10 so as to form concave and/or convex regions as side walls of the hexagonal cells 9 after the folding operation. The form of the regions 5, 7, 15 can be selected so that identical cells 9 are formed (Fig. 3a) in which the side walls of adjacent cells only touch at certain points or restricted areas. Alternatively, the form of the regions 5, 7, 15 can be selected so that non-identical cells 9 are formed (Fig. 3b) in which the side walls of adjacent cells are parallel to each other, e.g. touch along their length. FIG. 3b shows the embodiments of FIG. 1 in a schematic form in side view. In yet a further embodiment, adjacent cells are made as mirror images of each other (FIG. 3c) by the selection of the form of the regions 5, 7, 15. In yet a further embodiment, the identical cells can be fomed with side walls that are parallel to each other, e.g. touch along a considerable height of the cell walls (FIG. 3d). The skilled person may conceive yet further designs by selecting particular forms of the regions 5, 7, 15 that are all included within the scope of the present invention.

The present invention also includes in further embodiments an alternative method of manufacture that does not make use of the flat portions 20, 21 of the web material 10. FIG. 4 shows how the honeycomb cells are formed from a plastically deformable material web with v-shaped connection areas 17 and 18. The plastically deformable material of web 10 may be a thin thermoplastic polymeric material, single layer or multilayer thermoplastic films with or without sealing barrier layers or adhesive surface layers for connecting the cell walls, a fiber composite material, plastically deformable paper or metal sheet or similar. Also in accordance with this embodiment the flat web has plastic deformations 1, 2 formed therein mainly perpendicular to the material web. In the regions 1 and 2, the material is deformed, e.g. polygonally, for example trapezoidally, or sinusoidally, or arcuately or the like, from the plane of the web. The deformations form ridges 8 and valleys 9 whereby each of these is not necessarily continuous. For example, the ridges are composed of a linear series of deformed sections 1, 2 e.g. polygonal, for example trapezoidal, or sinusoidal, or arcuate sections or the like. Preferably the ridges have a top surface 15 that may be initially parallel to the plane of the web of material and side regions 5, 7. The production direction is preferably as shown in Fig. 1 and Fig. 4 however a direction perpendicular thereto (parallel to the axes 25 and 26) could be used as well.

The regions 1 and 2 are preferably formed inclined i.e. rotated towards each other around the axis 25 and/or 26, to form additionally u- or v-shaped connection areas 17 and 18. The areas 17 and 18 separate the ridge sections 1, 2, e.g. the polygonal, for example trapezoidal, or sinusoidal, or arcuate sections or the like in one row of regions 1, 2. One connecting section 17, 18 is placed between two regions 1, 2 and connecting sections 17 alternate along the row of regions 1, 2 with connecting sections 18. The areas 17, 18 form cross-valleys, i.e. perpendicular to the valleys 9. Adjacent cross-valleys are on opposite sides of the web material. The rotation of the regions 1, 2 to bring them into the initial position of Fig. 4 section II is preferably performed at the same time as the deformations are placed into the web of material 10. The web material is stretched at the transitions between the areas 1 and 2 to form the areas 17 and 18, which are substantially perpendicular to the outer surfaces 15 of the areas 1 and 2. The angle between surfaces 17, 18 on different ridge sections, allows a part of a tool to enter and thus to form these sections. The width direction of the material web elongates preferably in the direction of the axis 25 and 26 while the endless length direction of the material web is continuous along the production direction.

The deformation of the web material in the regions 1 and 2 serves the purpose of the formation of three-dimensional shapes, which form the walls of cell halves in the folded end product. These cell walls form into a ring during the folding operation. The cells thus formed are elastic elements of the folded end product, the walls of which extend transversely to the longitudinal direction of the folded end product. In the folded end product, the cells formed by folding are preferably generally cylindrical in cross section, the axis of the cylinder extending transversely with respect to the longitudinal direction of the folded end product and in thickness direction of the planar honeycomb finally produced. The cross-sectional shape of a cell can be selected as desired, for example circular or polygonal, in particular even-numbered polygonal, for example hexagonal. The final cell shape is determined by the shape of the deformed areas 1, 2 in the original web and how they fold together. When the web is fully folded each cell is formed from two half-cells. The cells are arranged in rows. Each final cell is formed by the bottom and sides of two longitudinally adjacent (in the web material) valley sections 9.

Accordingly, the present invention provides a folded honeycomb, formed from a plurality of cells arranged in rows, with the following features: the cells have lateral cell walls which adjoin one another in the form of a ring and are bounded toward two opening sides of the cell by covering-layer planes whereby the cells are each bridged or closed completely in one or other of the covering-layer planes. The folded honeycomb is formed from a substantially uncut flat body. The folded honeycomb contains a plurality of 3D-structures, e.g. polygonally, sinusoidally or arcuately shaped regions (1 and 2) formed by plastic deformation and connecting areas (3 and 4) in the covering-layer planes produced by the plastic deformation. Perferably the cell walls are wholly or partly permanently connected to one another, e.g. by glue or adhesive or welding. On the upper surface of the honeycomb the areas 18 are preferably connected to neighbouring areas 18 as well as to the regions 20. On the lower surface the areas 17 are preferably connected to neighbouring areas 17 as well as to the regions 21.

The present invention includes the final folded product being a mixture of cells with different cross-sectional shapes and/or sizes. The final honeycomb structure is a planar product whereby the cells are arranged perpendicular to the plane of the product and across the thickness. Cells on alternating sides of the planar structure are closed by the connection areas 17, 18. All the cells can be closed by the application of one or more covering layers, e.g. by laminating the planar product of the present invention with covering sheets. The present invention includes within its scope the possibility that the 3D structures 1, 2, e.g. trapezoidal, sinusoidal or circular structures in the web which form the cell walls are not fully vertical and/or not contacting each other after the folding of the deformed material web thus forming a structure which is at least in one direction open in-plane.

Returning to Fig. 4, the production method continues by rotating the regions 1 and 2 further so that the surfaces 15 from adjacent ridge sections are adjacent to each other. The narrowing of the plastically deformed material web occurs by the folding operation of the material web about the folding lines 25 and 26. The u- or v-shaped connection areas 17 and 18 are unfolded and come to lie flat in the plane perpendicular to the cell walls. The areas 17 and 18 are introduced to enable the vacuum thermoforming and to avoid substantial deformation of the 3D structures of the material web e.g. the polygonally, for example trapezoidally, or sinusoidally, or arcuately deformed sections 1 or 2 or the like.

As a result of being folded together, the adjacent regions 17 (respectively 18) butt against one another. Each honeycomb cell is then closed by an area 17 or 18 on at least one side. That is the cells have on one end a closed surface formed by the areas 17, 18.

The above process relies on folding the deformed web material whereby the way the 3D-structures 1, 2 and the surfaces 17, 18 are formed is done to ease the folding and rotation process. To ease the folding operation the plastically deformed material web has the axis 25 and 26 (around which the material regions 1 and 2 rotate during folding) preferably positioned out-of-plane with a positive value "x". The dimension x is selected so that the cross-valley on the upper surface of the material has its lowest apex joining point on the axis 26 of the valley higher than the apex joining point on the axis 25 of a cross-valley which is on the lower surface of the web. A longitudinal force along the production direction will act through the axes 25 and 26 and by so doing will exert a bending moment about the axes 25, 26. This allows that the formed material web can be folded up by simple compression in the production direction.

The production can be automated and run continuously. Preferably pairs of rollers are used to push the material web together in production direction. However, rotating tools, oscillating translating tools or guiding profiles can be used to help or ensure the folding up of the web.

The elastic geometry of the 3D structures of the material web can result in deformations due to compression forces in production direction during the folding process (stage II). This depends on the loads on the web sheet material during the folding process. The limitation and control of the in-line compression during the folding process is furthermore useful for web material with a very low weight per unit area, a low strength as well as for web material from which cells with very small dimensions of the 3D structures are to be formed. Low weight per unit area of the web material leads to a small cell wall thickness, while small dimensions of the 3D structures result in a small cell size and small cell height.

An independent aspect of the present invention, which may be used with any method of making a honeycomb structure from a continuous web, includes the use of transport assisting means to better control compression forces (or tension forces) during production especially during folding. For any folding process of the web where the folds are transverse to the machine direction there can be a difficulty between competing forces - the need to compress web in a longitudinal direction to make the fold and the force required to transport the web forwards. This problem can get worse as the thickness and therefore the rigidity of the web is less. The lower the rigidity the more a conflict can occur between the longitudinal forces needed to make a transverse fold and the force needed to transport the web in the machine direction. The present invention includes the use of the force of gravity to assist, e.g. by processing the web not horizontally but vertically in a vertical channel. This can ensure that the web compression force is increased linearly during the folding process. Instead of only horizontal or vertical movements of the web material, the present invention also includes manufacture along a trajectory, e.g. along a sloping pathway or a curved pathway such as shaped as a catenary.

Alternatively the web material can be transported between walls of a channel with the help of compressed air either alone or in addition to other assisting means. Air blown onto the web in the production direction can reduce or overcome the friction to transport and compress the material in production direction while applying controllable out of plane forces to ease the folding of the web material. The air may be blown onto only one side of the web material (i.e. on either one of the major surfaces) or may be blown on both sides.

Also vibration may be used alone or in addition to other assisting means to reduce friction between the web material and any surface that it is travelling on.

Alternatively, the assisting means may be based on frictional forces, e.g. the underlying surface may be made to move with the web material in the production direction at a certain speed alone or in addition to other assisting means. This speed may be adjusted low enough to prevent increased compression at the folding stage II caused by piling up of web material at this point. Further it is possible to use a different conveyor belt for stage 1 than for stage II and/or III to thereby reduce compression forces by adapting the speed of the conveyor belts to the actual speed of the folded web material.

An independent aspect of the present invention is to form a folded honeycomb by means of non-cutting, continuous, plastic rotation forming of a material web. The plastic deformation of the web material can be carried out, for example, by means of a "rotation vacuum thermoforming" process, such as is common in the production of air-bubble film. The material, provided as a preheated film or directly via a film die from an extruder, is preferably drawn by a profiled roll with the aid of vacuum. Inter-engaging profiles on the rolls running against each other can also be used.

The surface of the vacuum roller for the thermoforming of the material web has a relative complex geometry to enable that in the formed material web the areas 1 and 2 are not only formed but also preferably only slightly rotated (e.g. 10 to 30°) towards each other. This allows the formation of the v-shaped areas 17 and 18, and ensures a vacuum thermoformable airtight shape of the material web that can be folded by further rotation (e.g. of about 80° to 60°) of the areas 1 and 2 around the axis 25 and 26.

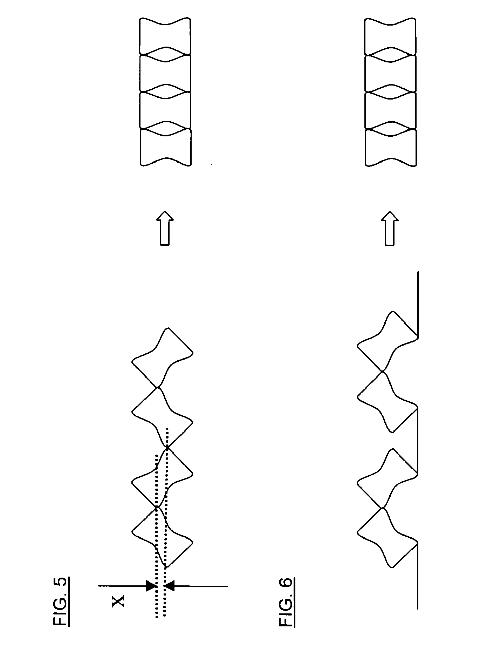

FIG. 5 show a side view of an embodiment that can be manufactured using the basic manufacturing method described with reference to FIG. 4. In FIG. 5, the surfaces 5, 7, 15 are shaped by plastic deformation so that after folding identical cells 9 are formed whereby the cell side walls are concave so that there is an open space between the side walls of adjacent cells. Also included within the scope of the present invention are designs such as shown in FIGs. 3b, c and d but made with the manufacturing method described with respect to FIG. 4.

The final shape of the cell walls may differ from the shape formed into the surfaces 5, 7, 15, because during folding the cells walls 15 and 19 may be deformed by neighbouring cells walls. In FIG. 4 such a contact of cell walls is shows at the positions 35.

In addition the manufacturing methods described with respect to FIGS. 1, 2 and 4 can be combined to make a hybrid honeycomb structure as shown schematically in FIG. 6. In this further embodiment of the present invention, a part of the web is processed as in FIG. 1 using a flat portion of the web material 20 (or 21) and inclined regions 1, 2 as described with reference to FIG. 4.

Any of the folded honeycombs according to embodiments of the present invention can be directly further processed to a lightweight sandwich panel by lamination or direct extrusion of covering layers onto both sides of the honeycomb core, e.g. with lamination rollers or belts. Covering layers may be thin thermoplastic polymeric material, including polymeric foam layers, paper, a fiber composite material or metal sheet or similar.

The elastic honeycomb sheet in accordance with the present invention can be used for a variety of applications. Due to their elastic nature, they can be used in packaging applications, especially for cushioning and as protective packaging material e.g. for surface protection, for insulation, for inner packaging in envelopes and boxes. Made from low cost polymeric materials (e.g. polyethylene) the elastic folded honeycomb offers an alternative to air bubble film and polyethylene foam layers. Furthermore, the disclosed elastic folded honeycomb sheet offers a more cost efficient, more light weight and better recyclable alternative to foam sheet and may thus be used for upholstering in the furniture and automotive industry as well as in healthcare and comfort product, in sport pads and shoe soles.

They may also be used in any application that requires a soft or elastic planar material. The elastic honeycomb sheet may be used in furniture cushions, as a wall covering, a ceiling covering, a floor covering, a laminate flooring insulation, a carpet cushioning or carpet backing, a wall, floor or ceiling insulation, etc. The materials used in the elastic honeycomb sheet in accordance with any of the embodiments of the present invention when used as carpet cushioning and backing are preferably the same as are used for the tufts of the carpet (e.g. polypropylene) so that the whole carpet is recyclable. Accordingly, the present invention includes within its scope a carpet comprising a folded honeycomb, formed from a plurality of cells arranged in rows, comprising cells having lateral cell walls which adjoin one another in the form of a ring and are bounded toward two opening sides of each cell by covering-layer planes whereby the cells are each bridged completely or partially in one or other of the covering-layer planes; the folded honeycomb being formed from a substantially uncut flat body; the folded honeycomb having a plurality of 3D-structures formed by plastic deformation and connecting areas produced by the plastic deformation, the connecting areas being located in one or other of the covering-layer planes in the folded honeycomb, the cells walls having convex and/or concave portions as an integral part of a carpet. The elastic honeycomb sheet in accordance with any of the embodiments of the present invention may be used as the primary backing or as the secondary backing of a tufted carpet or as both.

The elastic honeycomb sheet in accordance with any of the embodiments of the present invention may be formed into a stack of layers as a replacement for any thickness of a rubbery material such as foamed rubber.

## Claims

1. Folded honeycomb, formed from a plurality of cells arranged in rows, comprising: cells having lateral cell walls which adjoin one another in the form of a ring and are bounded toward two opening sides of each cell by covering-layer planes whereby the cells are each bridged completely or partially in one or other of the covering-layer planes; the folded honeycomb being formed from a substantially uncut flat body; the folded honeycomb having a plurality of 3D-structures formed by plastic deformation and connecting areas produced by the plastic deformation, the connecting areas being located in one or other of the covering-layer planes in the folded honeycomb, the cells walls having convex and/or concave portions.

2. Folded honeycomb or claim 1, wherein the 3D-structures are polygonally, sinusoidally or arcuately shaped regions.

3. Folded honeycomb according to claim 1 or 2, in which the cell walls have an undulating shape.

4. Folded honeycomb according to claim 1 or 2 or 3, in which at least a part of the cell walls are wholly or partly permanently connected to one another.

5. Folded honeycomb according to any previous claim, in which the flat body is formed from a thermoplastic polymer, a fiber composite material or a plastically deformable paper or metal sheet.

6. Process for producing a folded honeycomb from a flat body composed of a plastically deformable material, comprising:
a) plastically deforming the flat body to form first 3D-structures and second connection areas therein, the second connection areas being formed between first 3D-structures; and
b) folding the 3D-structures towards each other to form cells having cell walls which adjoin one another in the form of a ring so that a cell wall of one cell adjoins the cell wall of another cell in a honeycomb structure, the 3D-structures being formed such that the cells walls have convex and/or concave portions.

7. Process according to claim 6, wherein the 3D-structures are polygonally, sinusoidally or arcuately shaped regions.

8. Process according to claim 6 or 7, wherein at least a part of mutually contacting surface areas and/or edges of the cells are firmly connected to one another.

9. Process according to any of the claims 6 to 8, wherein the deformable material is a thermoplastic polymer, a fiber composite material or a plastically deformable paper or metal sheet.

10. Process according to any of the claims 6 to 9, wherein the deforming to form the 3D-structures is carried out by means of a non-cutting rotation process.

11. Process according to claim 10, which the deformation is carried out by means of a rotation vacuum thermoforming process.

12. A carpet including a folded honeycomb according to any of the claims 1 to 5.

13. Equipment for producing a folded honeycomb from a flat body composed of a plastically deformable material, comprising:
a) means for plastically deforming the flat body to form first 3D-structures and second connection areas therein, the second connection areas being formed between first 3D-structures; and
b) means for folding the 3D-structures towards each other to form cells having cell walls which adjoin one another in the form of a ring so that a cell wall of one cell adjoins the cell wall of another cell in a honeycomb structure, the 3D-structures being formed such that the cells walls have convex and/or concave portions.

14. Process for producing a folded honeycomb from a flat body, comprising:
a) plastically deforming or folding the flat body to form first 3D-structures and second connection areas therein, the second connection areas being formed between first 3D-structures; and
b) folding the 3D-structures towards each other to form cells having cell walls which adjoin one another in the form of a ring so that a cell wall of one cell adjoins the cell wall of another cell in a honeycomb structure,
the folding being assisted by transport assisting means in the longitudinal machine direction to thereby control compression forces and/or tension forces in the web during folding.

15. The process of claim 14 wherein the assisting means are at least one of: the force of gravity, compressed air, vibration, frictional forces.

16. Equipment for producing a folded honeycomb from a flat body, comprising:
a) means for plastically deforming or folding the flat body to form first 3D-structures and second connection areas therein, the second connection areas being formed between first 3D-structures;
b) means for folding the 3D-structures towards each other to form cells having cell walls which adjoin one another in the form of a ring so that a cell wall of one cell adjoins the cell wall of another cell in a honeycomb structure, and
c) assisting means for assisting transport of the web in the longitudinal machine direction to thereby control compression forces and/or tension forces in the web during folding.

17. The equipment of claim 16, wherein the assisting means are at least one of: the force of gravity, compressed air, vibration, frictional forces.
